Europäisches Patentamt

European Patent Office

Office européen des brevets

(11) Publication number: **0 499 012 A2**

# EUROPEAN PATENT APPLICATION

(21) Application number: **91810977.8**

(22) Date of filing: **13.12.91**

(51) Int. Cl.5: **H04M 1/72, H04M 11/06**

(30) Priority: **13.02.91 US 654541**

(43) Date of publication of application:
**19.08.92 Bulletin 92/34**

(84) Designated Contracting States:
**AT BE CH DE DK ES FR GB GR IT LI LU NL SE**

(71) Applicant: **OIS OPTICAL IMAGING SYSTEMS, Inc.**
**1896 Barrett Street**
**Troy, Michigan 48084(US)**

(72) Inventor: **Yaniv, Zvi**
**30257 High Valley Road**
**Farmington Hills, Michigan 48331(US)**
Inventor: **Hoffman, Robert**
**5015 Caraway Street**
**Sterling Heights, Michigan 48310(US)**
Inventor: **Catchpole, Clive**
**31050 Stafford Drive**
**Birmingham, Michigan 48010(US)**

(74) Representative: **Kügele, Bernhard et al**
**c/o NOVAPAT-CABINET CHEREAU 9, Rue du Valais**
**CH-1202 Genève(CH)**

(54) Portable, compact voice and data telecommunications apparatus.

(57) Disclosed is a portable, compact telecommunications system (1) adapted to send and receive information in either voice or facsimile fashion. The telecommunications system can transmitted and receive information over the standard or mobile telephone networks, and stores received facsimile information in on board memory devices (926), while displaying the message on a information display (920).

FIG - 1

## FIELD OF THE INVENTION

The present invention generally relates to an apparatus adapted to receive and transmit voice and facsimile data. The present invention more particularly relates to a portable, compact telecommunications apparatus intended to transmit, receive, store, display and archive data and image information and transmit and receive voice information over either the switched telephone network or through the cellular telephone network. As the instant device is portable and compact, it is battery operated for operation in locations remote from standard electric power sources, and is integrally housed in a low profile, ergonomic case.

## BACKGROUND OF THE INVENTION

The transmission and receipt of information, voice, graphic and text, has become an integral part of the way increasing numbers of people conduct their business and personal affairs. Mobile telephone service has only recently become readily accessible to the general public. This accessibility has greatly increased the efficiency of managing information flow by allowing individuals to communicate during drive times which were heretofore unproductive. This accessibility has also opened up the possibility of transmitting and receiving facsimile information to and from remote locations, not having standard telephone service.

However, while portable cellular telephone devices have only recently become truly compact and portable, facsimile machine while arguably portable, can be by no means considered compact. Moreover, there has heretofore been no device which incorporates both voice and facsimile communications capabilities into a single light weight, low profile housing easily fitting into a brief case or automobile glove compartment. Additionally, the individual facsimile machines heretofore known in the field have not possessed easily removable memory means for use in other office systems.

Accordingly, there is and has been a need for an integrated voice and facsimile transmission and receiving telecommunications system which is light weight, low profile and easily portable, which has not been addressed by the devices known in the prior art.

## SUMMARY OF THE INVENTION

The shortcomings of the prior art are obviated by the portable, compact voice and facsimile information telecommunications system disclosed herein and adapted to communicate over the public, switched telephone network and the cellular telephone network. The system is adapted to be used as a normal telephone for voice messages and to transmit and receive facsimile images. As the device is portable and compact, it is battery operated and is small enough to be easily carried in a brief case. It is to be understood by compact and portable, it is intended that the telecommunications system have dimensions of approximately 15 inches by 5 inches by 2 inches and weigh less than about 5 lbs. While the telecommunications system is small and portable, it comprises a number of components critical to its unique operation.

The telecommunications system consists of several major components which each contribute to the operation of the device. The first such component is a scanning mechanism for digitizing information, i.e., for providing electrical signals representative of an image having light and dark or multi-colored portions carried on an image bearing member. In practice, this component will digitize information, either graphic or text, which will be subsequently sent in facsimile form.

In a preferred embodiment of the invention, the scanning mechanism is a thin film image scanning device, such as a contact image sensor, which comprises an array of at least one column of light sensitive elements disposed upon a substrate. The light sensitive elements can be, for example, photovoltaic cells or photoresistors formed of deposited semiconductor material such as an amorphous silicon alloy. The thin film scanning device typically further includes a light source for illuminating portions of the image bearing member immediately adjacent to the device for detecting the differences in the light, dark or color portions of the image thereon. The image scanning device may further include an optical element, such as a selfoc lens so as refine device resolution.

The second major component of the telecommunications system is a display device, which is adapted to perform at least two functions; to operate as a dynamically varying control panel for operator interaction with the system; and to display information, either graphic or text, which is 1) scanned into the system either by the scanning mechanism 2) which is received by facsimile transmission; or 3) which is stored in the memory device, described in greater detail hereinafter. In practice, the display is typically selected from the group including cathode ray tubes, liquid crystal displays, active matrix liquid crystal displays, passive displays, electroluminescent displays, gas plasma displays, and displays employing twisted nematic or supertwist liquid crystal material.

Integrally formed with the display is the third major component of the telecommunications device; a transparent, touch sensitive control panel. The control panel, which can be, for example a thin membrane touch sensitive switch panel or a solid state touch sensitive position sensor, overlays the display for inputting information into the telecommunications system in response to the prompts displayed by the dynamically varying display.

Included in the telecommunications system is a modem integrated circuit and associated interfaces for effecting communication with the general telephone network, either through a direct access arrangement or through the mobile cellular network. In practice, the modem integrated circuit performs the protocol conversions which enable the telecommunications system to communicate with other facsimile machines.

The fifth major component of the instant system is one or more long-term memory devices for storing information 1) received by the system; 2) information scanned into the system by the thin film image scanning device; and 3) information programmed into the system through the touch sensitive control panel. It is also contemplated that with sufficient on-board memory, voice information may also be stored. In a preferred embodiment, the memory device is erasable, programmable and removable memory so that information stored therein can be taken from the system and input into other devices such as a laser printer so as to print a hard copy of the information stored therein, or into a personal computer so that the stored information can be accessed and manipulated or printed. In a further preferred embodiment, the memory device is a serial access random access memory. In a second and equally preferred embodiment, the memory device is a flash memory card.

The system further includes a compression expansion engine integrated circuit for quickly performing the algorithms required to transmit and receive compressed information in communication with another facsimile machine. Of course each of the above-referenced components requires control and coordination instructions in order to operate as a fully integrated telecommunications system. This function is satisfied by the inclusion in the system of a microprocessor control circuit having a real time clock and associated memory. This microprocessor circuit is a standard circuit of the type well known in the art.

As the system is intended to be small, compact and easily transportable, each of the above-recited elements is incorporated into an ergonomically designed housing. This housing is adapted to allow the image scanning device to operate as a hand held scanner. This is accomplished by having via or a slit formed through the housing on the side thereof opposite the scanner so that the housing may be moved over an image bearing member to scan the image present thereon. As the system is intended to provide for easy, hands-free operation, it may further include a voice recognition integrated circuit to allow for voice activated operation.

As can be discerned from the description of the telecommunications system provided hereinabove, the system does not include a printer mechanism integrally associated therewith. This has the advantage of eliminating the size, weight and power constraints imposed by such a mechanism. Additionally, the problems associated with paper handling and storage are eliminated. The power requirements are of particular importance, as the device is intended to be compact and portable, thus demanding a light weight, low profile device.

Rather than using a printer mechanism, images stored in the telecommunications system are viewed on the display provided. These images can be converted into hard copy in at least two ways; first, the system can directly interface with a printer through a standard printer connection, and can thus be instructed through the control panel to output a stored image; or the memory device itself can be removed, as in the case of a flash memory card, and inserted into any computer with the appropriate software, so as to be printed out on the associated printer. Of course these images could also be used as input files for word processing or similar programs. Similarly, information generated on a computer and stored on the flash memory card could be used as the input file to be subsequently sent out by facsimile from the telecommunications system.

As the telecommunications system is adapted to operate in several distinct operating modes, operation must be controlled by the touch sensitive switch or control panel. This panel can be used for every operation of the device from selecting the operating mode to dialing the desired phone number. The simplest operation of the device is its use as a telephone for voice communication. A microphone and speaker are provided in the device and either hand-held or speaker phone operation can be selected. Additionally, the system is adapted to be voice actuated, i.e., respond to the voice commands of the operator. Provision is also made to accommodate automatic dialing of pre-programmed telephone numbers, and transmission of previously stored facsimile images. Further, when the operator is not present, the telecommunications system can be put into an automatic mode in which incoming messages, primarily facsimile, will be stored in the memory. Such stored messages can then be retrieved at the operators leisure and restored, if desired, for later printing.

As the telecommunications system places a premium on light weight and portability, it is necessary to reduce the power requirements and thus avoid the need for a large battery. The battery power source provided is made appropriate for each of the components by an efficient, integrated switching circuit. Power is supplied to each of these components for the absolute minimum time required for that component to accomplish its function. In this regard, the microprocessor includes a reduced function mode to conserve power and the flash card memory does not require a battery to preserve information stored thereon. A small long-life battery can be provided to power the real-time clock and the memory of the microprocessor. Otherwise, the telecommunications system is powered by a rechargeable battery pack, or one or more non-rechargeable batteries. Of course, the system is adapted to run off of standard household currents.

These and other advantages and objects of the telecommunications system of the instant invention will be detailed in the following paragraphs.

## BRIEF DESCRIPTION OF THE DRAWINGS

Figure 1 is a perspective view of the telecommunications system of the instant invention, including a display and voice communication means;

Figure 2 is a partial side view, partially in cross section, of a thin film image scanning device of the type employed in the instant invention;

Figure 3 is a top plan view of the thin film contact image scanning device of Figure 2;

Figure 4 is a perspective view of a touch sensitive position sensor of a type usable in the telecommunications system of Figure 1;

Figure 5 is a cross-sectional side view of a liquid crystal display of the type usable in the telecommunications system of Figure 1;

Figure 6 is a top plan view as seen along lines 6-6 of Figure 5;

Figure 7 is a schematic circuit diagram illustrating the equivalent circuit of the liquid crystal display of Figure 5;

Figures 8a and 8b are perspective, partially exploded, partially cutaway illustrations of an integrated touch sensitive position sensor and display; and

Figure 9 is a block diagram illustrating the relationship between the various components of the instant telecommunications system.

## DETAILED DESCRIPTION OF THE INVENTION

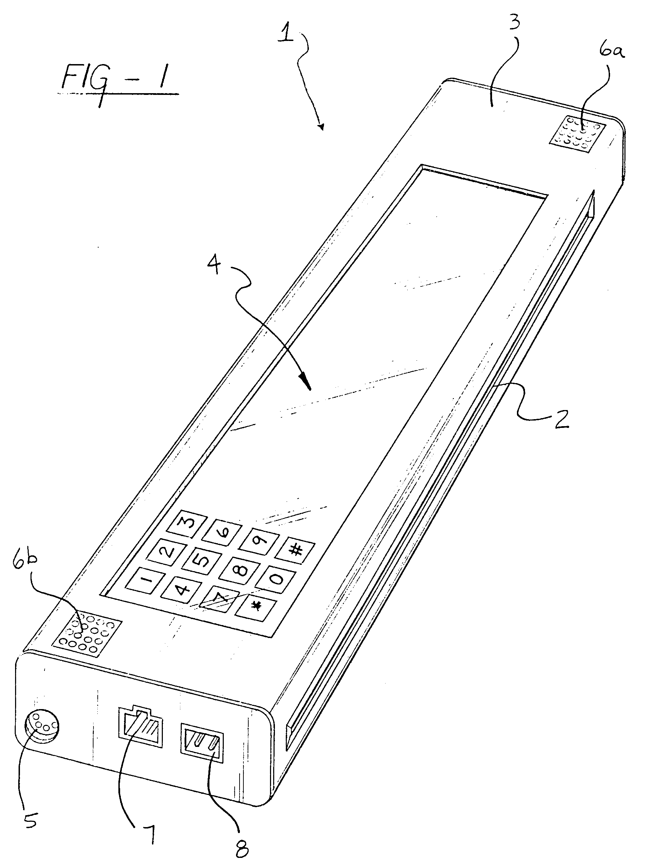

The telecommunications system of the instant invention allows, for the first time, the integration of a number of information transmitting and receiving input/output elements so as to provide for a truly compact, telecommunication system. Referring now to Figure 1, there is illustrated therein the compact, portable telecommunication system 1 of the instant invention. The telecommunications system 1, includes a number of different components integrated into a single compact, portable package. Each discrete component will be discussed in greater detail hereinbelow. The telecommunication system 1 includes a contact-type document scanner 2 integrated into the telecommunication system's housing 3. As may be appreciated from a perusal of Figure 1, the document scanner 2 is designed so as to traverse, for example, the entire width dimension of an image bearing member, such as a standard sheet of paper. The document scanner 2 digitizes the image carried on the image bearing member for transmittance per standard facsimile transfer (either cellular or standard telephone line).

The telecommunication system 1 further includes a touch-sensitive display 4 integrated into the housing 3. The touch-sensitive display 4 is adapted to be a dynamically varying display to provide for menu-driven operation of the various functions of the telecommunications system, as well as being adapted to display incoming and/or stored facsimile messages. Incoming facsimile messages are also stored in an on-board memory device (not shown) of the kind known in the art. Accordingly, incoming facsimile messages can be received on the display 4 and stored in the device by the telecommunication system user. Important messages can then be subsequently recalled from memory so as to make hard copies by down loading the stored information via the printer interface 5. The printer interface 5 allows the telecommunication system 1 to communicate with a standard desktop facsimile machine or laser jet printer so as to provide for a printed copy of the fax message. Alternatively, the memory itself is removed from the telecommunications system 1, and inserted into a computer having appropriate software to input the information stored thereon.

The telecommunication system 1 also includes telephone receiver 6a and transmitter 6b components to allow the telecommunication system 1 to operate as a telephone for voice communication. Accordingly, the system 1 includes a telecommunication input/output plug 7 adapted to transmit and receive both analog (voice) and digital (data) information from the standard wire accessed telephone network as well as through the mobile cellular telephone network. Finally, as the telecommunication system 1 is meant to be portable, the system must include an on board power source. The power source (not shown) is a rechargeable battery of pack including, for example, one or more rechargeable cells such as , for example NiCad, metal hydride or lithium cells of the type know in the art. The battery pack includes a power input port 8 adapted to allow the telecommunication system 1 to either recharge while not in use, or to run off of common sources of power such as are found in the home, office or standard automotive electrical systems.

As one of the principle advantages of the instant telecommunication system 1 is portability, the system is designed to fit easily into brief cases, or portfolios while presenting a low profile, package which fits easily on a car dashboard, in the utility tray or in the glove compartment. Accordingly, it may be appreciated that the system 1 have dimensions of no more than, (and preferable less than) about 16 inches in length, 6 inches in width and 3 inches in thickness, and less than about 5 lbs in overall weight.

In order to gain an appreciation for the telecommunication system disclosed herein, it is helpful to understand the individual components integrated thereinto. Accordingly, each component is described in greater detail hereinbelow.

A. CONTACT TYPE DOCUMENT SCANNER

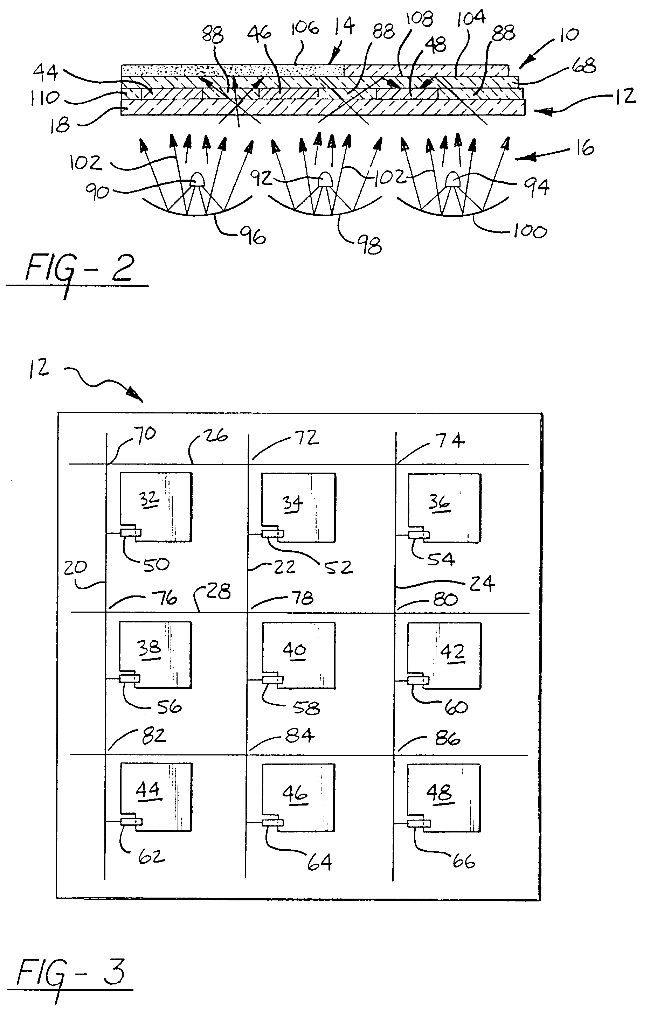

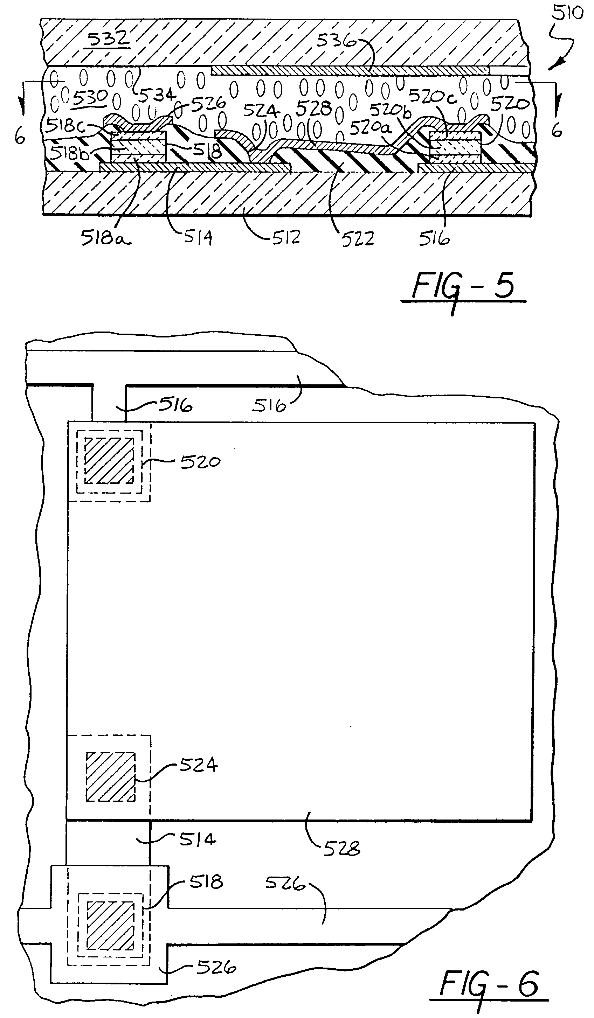

FIGS. 2 and 3 illustrate a thin film image scanning device of the type typically employed in the present invention. The system 10 illustrated in FIG. 2 generally includes an apparatus 12 capable of providing electrical signals representative of an image carried by an image-bearing member such as a document 14 disposed thereover, and a light source 16.

The apparatus 12 includes a transparent substrate 18, a first set of X address lines including address lines 20, 22, and 24, a second set of Y address lines including address lines 26, 28, and 30,and a plurality of light sensitive elements 32, 34, 36, 38, 40, 42, 44, 46, and 48. The apparatus 12 further includes an isolation device 50, 52, 54, 56, 58, 60, 62, 64, and 66 associated with each light sensitive element, and, a transparent cover means 68.

As can be noted in FIG. 3 the X address lines 20, 22, and 24 and the Y address lines 26, 28, and 30 cross at an angle, and, as will be more apparent hereinafter, are spaced from one another to form a plurality of crossover points 70, 72, 74, 76, 78, 80, 82, 84, and 86. Associated with each of the crossover points is a respective one of the light sensitive elements. The light sensitive elements 32-48 are formed on the substrate 18 and are distributed thereover in spaced apart relation to form spaces 88 between the light sensitive elements. The light sensitive elements 32-48 are further of the type which effect a detectable electrical characteristic in response to the receipt of light thereon. As will be more fully described hereinafter, the light sensitive elements 32-48 can comprise photovoltaic cells or photoresistors which effect a detectable change in electrical conductivity in response to the receipt of incident light thereon. The light sensitive elements are preferably formed from a deposited semiconductor material, such as an amorphous semiconductor alloy. Preferably, the amorphous semiconductor alloy. Preferably, the amorphous semiconductor alloy includes silicon and hydrogen and/or fluorine. Such alloys can be deposited by plasma assisted chemical vapor deposition, i.e., glow discharge, as disclosed, for example, in U.S. Pat. No. 4,226,898 which issued on Oct. 7, 1980 in the names of Stanford R. Ovshinsky and Arun Madan for Amorphous Semiconductors Equivalent to Crystalline Semiconductors Produced By A Glow Discharge Process.

Each of the isolating devices 50-66 is associated with a respective one of the light sensitive elements 32-48. The isolation devices are also preferably formed from a deposited semiconductor material, and most preferably, an amorphous semiconductor alloy including silicon. The amorphous silicon alloy can also include hydrogen and/or fluorine and can be deposited by plasma-assisted chemical vapor deposition as disclosed in the aforementioned U.S. Pat. No. 4,226,898. As can be noted in FIG. 2, each of the isolation devices 50-66 is coupled in series relation with its associated light sensitive element 32-48 between respective paris of the X address lines 20, 22, and 24 and the Y address lines 26, 28, and 30. As a result, the isolation devices facilitate the selective addressing and detection of the electrical conductivity of each of the light sensitive elements by the application of read potentials to respective pairs of the X an Y address lines.

Referring now more particularly to FIG. 2 as can there be noted, the light source 16 comprises a plurality of individual light sources 90, 92, and 94. Associated with each of the sources 90, 92, and 94 is a reflector 96, 98, and 100. The light sources 90, 92, and 94 and the reflectors 96, 98, and 100 are arranged to provide diffuse light indicated by the arrows 102 which is projected onto the apparatus 12 on the side of the substrate 18 opposite the light sensitive elements and the document 14 to be scanned. The document 14 is disposed adjacent a transparent cover 68 which includes a substantially planar surface 104. The document 14 includes at least one portion 106 of high optical density, hereinafter referred to as the dark portions of the document, and portions 108 which are low optical density, and are hereinafter referred to as the light portions of the document. The cover 68 is preferably relatively thin so that the document 14 is closely spaced in juxtaposed relation to the light sensitive elements, such as the light sensitive elements 44, 46, and 48 illustrated in FIG. 2 for proximity focusing the image on document 14 onto the light sensitive elements. Alternatively, the image-bearing member may be spacedly disposed from the light sensitive elements, and the image on the image bearing member can be focused on the light sensitive elements by means of an optical elements such as a selfoc lens. The thickness of the cover 68 is chosen to give maximum useable signal consistent with a number of other variable parameters. These parameters include the angular distribution of the diffuse light intensity, the width of the light sensitive elements, and the spacing between the light sensitive elements. Preferably, the thickness of the cover 68, the width of the light sensitive elements, and the spacing between the light sensitive elements are all of comparable dimension.

When the document is to be scanned, it is first placed adjacent the planar surface 104 of the transparent cover 68 so that the document is disposed in closely spaced juxtaposed relation to the light sensitive elements. Then, the light source 16 is energized for projecting the diffuse light 102 onto the back side of the apparatus 12. The diffuse light is hereby projected onto the surface of the document 14 adjacent the planar surface 14. In the dark portions 106 of the document 14, the light will be substantially absorbed so that very little of the light impinging upon the dark portions 106 will be reflected back onto the light sensitive elements adjacent thereto, for example, light sensitive elements 44 and 46. However, the light striking the light portions 108 will not be substantially absorbed and a substantially greater portion of the light impinging upon the light portions 108 of the document will be reflected back onto the light sensitive elements adjacent thereto, such as light sensitive element 48. The light sensitive elements adjacent the light portions 108 of the document will thereby effect a detectable change in their electrical conductivity. When the light sensitive elements are formed from photovoltaic cells, they will not only effect a change in electrical conductivity, but will also generate current. When the light sensitive elements are photoresistors, they will effect an increased electrical conductivity which can be detected by the application of read potentials to the respective pairs of the X address lines 20, 22, and 24, and the Y address lines 26, 28, and 30.

Electrical signals representing a faithful reproduction of the document 14 can be obtained because the light sensitive elements 32-48 can be made very small. For example, the light sensitive elements can be made to have dimensions of approximately 90 microns on a side. The isolating devices 50-66 can be formed to have a dimension of about 10-40 microns on a side and preferably 20 microns on a side. Also, the light sensitive elements 32-48 can be spaced apart so that they cover only a portion of the substrate 12 to permit the light to be projected onto the document to be scanned. For example, the light sensitive elements can be spaced so that they cover about 25-50% of the overall surface area of the substrate 18. Also, the light sensitive elements can be arranged in substantially coplanar relation so that each will be equally spaced from the document to be scanned. Although FIG. 3 illustrates a 3 x 3 matrix of light sensitive elements, it can be appreciated that a much larger array of elements would be required in actual practice for scanning a document.

The electrical characteristic, and, in accordance with this preferred embodiment, the electrical conductivity of the light sensitive elements can be detected by applying read potentials to respective pairs of the X and Y address lines in series, and one at a time. However, and most preferably, the light sensitive elements can be divided into groups of elements and the read potentials can be applied to each group of elements in parallel to facilitate more rapid scanning of the document. Within each group of elements, the elements can be scanned in series.

Further, electrical signals can be provided which represent the color hues of an image. For example, each of the light sources 96, 98, and 100 can include three separate light sources each being arranged to emit light of a different primary color of red, green, and blue. To generate the electrical signals representative of the color hues of the image, the image-bearing member 14 can be sequentially exposed to red, green, and blue light. During each exposure, the light sensitive elements can be addressed. For example, when the document 14 is exposed to the red light, those image portions thereof which include a red color component will reflect red light onto the light sensitive elements adjacent thereto. These elements will effect a greater change in electrical conductivity than those elements adjacent image portions which do not include a red color component. After this procedure is performed for each of the red, green, and blue primary colors, the three electrical signals provided from each light sensitive element can be combined to derive both intensity and color hue of the image.

Finally, the thin film image scanning device further includes a paper drive motor operatively disposed in relation thereto. The function of the paper drive is to allow the image-bearing member to be moving relative to the image scanning device so that the entire image bearing member is scanned. Additionally, the paper motor moves the paper past the image scanner at a preprogrammed speed so that the image on the image bearing member is properly scanned without loss of resolution.

## B. TOUCH SENSITIVE DISPLAY

### 1. Touch Sensor

The telecommunications system of Figure 1, further includes a touch sensitive position sensor integrally formed with a display means (described in greater detail hereinbelow), and adapted for use as an input device in the instant invention, for inputting information into the telecommunications system, such as telephone numbers and operating instructions, in response to the dynamically varying instructions displayed by the display means.

In a first preferred embodiment of the instant system, the touch sensor is a thin membrane film touch sensor of the type well known in the art. This thin membrane film is capable of detecting the presence of a touch point made by, for example, a human finger, a pointer or a stylus. After detecting the presence of the touch point, the thin membrane film is capable, in coordination with integrated processing means, to identify the precise location of said touch point and relay that location to downstream processing means. This function is necessary to preserve the operation of the display as a dynamically varying control panel.

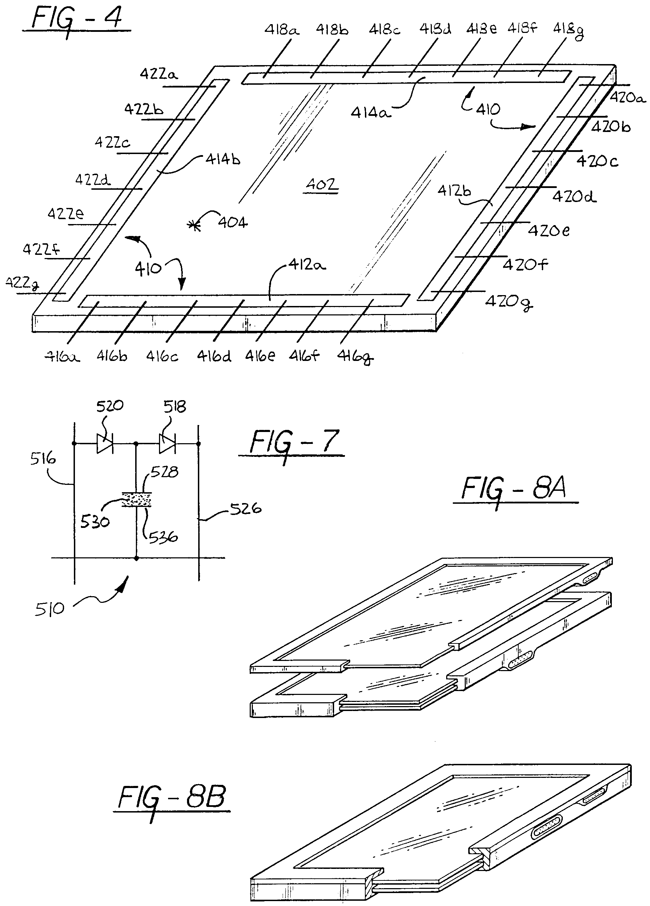

The touch sensor illustrated generally in FIG. 4 by the reference numeral 400, represents a second, but equally preferred embodiment of the instant system. The position sensor 444 depicted in FIG. 4 includes a generally rectangularly-shaped, electrically conductive, exposed surface 402 that is specifically adapted for detecting and signalling the X-Y coordinate location of a touch point 404, such as the finger of a user or a stylus, placed in contact with the surface 402.

In order to accomplish the function of touch point 404 location detection,, the position sensor 400 includes at least two sets of current distribution and collection means, generally 410. The current distribution and collection means 410 establishes a uniform linear electric field across the conductive surface 402 thereof. More specifically, the electric field distribution is established by a first elongated, current distribution means 412a, disposed along at least one boundary of the conductive surface 402 (such as the lower horizontal boundary thereof) and a first, elongated, current collection means 414a operatively disposed along at least a second boundary of the conductive surface 402. The current distribution means 412a and the current collection means 414a are parallel to and face each other on the conductive surface 402. The first set of current distribution and collection means, 412a and 414a are operatively disposed along two opposite boundaries of the conductive surface 402 of the position sensor 400 and are adapted to cooperatively provide a substantially uniform linear electric field distribution of substantially parallel equipotential lines E across the conductive surface 402. The current distribution and collection means can be formed as distributed diodes, though other devices may be employed with equal success.

In the rectangularly-shaped, touch sensitive position sensor 400 illustrated in FIG. 4 the first horizontally disposed current distribution means 412a and the first horizontally disposed, but vertically spaced, current collection means 414a cooperate to establish a first uniform electric field distribution with a first set of horizontal equipotential lines. This provides high resolution means of determining the y axis coordinate of the touch point. A second set of current distribution and collections means 410 are required in order to provide a x axis coordinate location. More specifically, the second set of current distribution and collection means includes one elongated, current distribution and collection means 412b disposed along one vertical boundary of the conductive surface 402 and a second elongate, current distribution and collection means 414b disposed along the opposite vertical boundary of the conductive surface 402, horizontally spaced from said second current distribution means 412b. The second set of vertically oriented, spacedly positioned, current distribution and collection means 412b and 414b, cooperate to establish a second set of uniformly spaced equipotential lines having a second electric field distribution orthogonal to the equipotential lines of the first field distribution. This provides x axis coordinate location determination means of high resolution.

The current distribution and collection means 412a, 412b, 414a, 414b contain a plurality of current leads (such as 416a, 416b, 416c...416m; and 418a, 418b, 418c...418m; 420a, 420b, 420c...420m; and 422a, 422b, 422c...422m) equally spaced along the lengths thereof. These current leads provide for the flow of electrical current through the current distribution and collection means to the conductive surface 402 of the position sensor 400, thereby establishing an electric field there across, which field results in a flow of current between the oppositely disposed and charged distribution and collection means (412a and 414a; 412b and 414b). The current leads are arranged in a configuration of approximately 40 lines per inch, though any given resolution (from 2 lines to 100 or more lines per inch) may be employed. However, it is to be understood that the number of current leads per unit length is limited by the requirement that cross-talk between adjacent current leads must be substantially prevented.

In the current distribution and collection means, the lateral distance between adjacent current leads must be such as to provide relatively high impedance to current flow therebetween, as compared to the effective impedance path along the conductive surface 402 of the position sensor 400. In this way current is preferentially conducted in a direction other than along the length of the current distribution and collection means. The resolution of the touch position sensor 400 (defined as the accuracy of determining a specific X-Y coordinate location by the uniformity and linearity of the field across the conductive surface, especially along edges of said surface nearest the disengaged current distribution and collection means, wherein the impedance of the disengaged current distribution and collection means must be fairly high to avoid the flow of current thereinto.

Electrically interconnected with each of the current distribution and collection means, 412a, 412b, 414a and 414b, are current control means (not shown). The current control means sequentially turn on and off, in alternating manner, the sets of current distribution and collection means 410. The current control means must be capable of switching from a substantially on condition to a substantially off condition, without allowing any leakage of current while in the off state.

The touch sensitive position 400 sensor further includes a resistance means electrically disposed between said current distribution and collection means 410 and said bounded conductive surface 402. It is preferred that the resistance means be capable of providing resistance substantially the same as the resistance of the conductive surface 402, and typically within the rang of 10 to 1000 ohms, and most preferably 50 to 500 ohms.

The exact principle employed in electrically determining the x-y location of the touch point 131 can be best described as follows. The conductive surface 402 of the sensor 400 is continually scanned by a stream of discrete scanning cycles. The scanning cycles are triggered by associated timing means adapted to correlate the location of a touch point 404 with respect to the distributed electric field. Specifically, each scanning cycle, of which there may be approximately 500 per second is an independent variable which may be within the range of 10 to 10,000 cycles per second) comprises two half cycles; the first half cycle is dedicated to determining the y-axis touch point 404 location by energizing the first or y-axis current distribution and collection means, 412a and 414a, and the second half cycle is dedicated to determining the x-axis location of the touch point 404 by energizing the second or X-axis current distribution and collection means, 412b and 414b. The complete operating parameters of the touch sensor described hereinabove are more fully described in commonly assigned United States Patent No. 4,827,085 to Yaniv, et al, issued May 2, 1989, the disclosure of which is incorporated herein by reference.

2. Display

The telecommunication system of the invention includes means for displaying information either received from other facsimile machine, stored in the memory provided in the telecommunications system or as part of the operational menu. In the preferred embodiment, the display means is a light influencing display, such as a passive or an active matrix display employing for example, chiral smectic material, twisted nematic material or supertwist material; an electroluminescent display, and a plasma display. The telecommunications system may also employ a standard cathode ray tube.

The light influencing display 4 of FIG. 1 includes a plurality of individually addressable picture elements, called pixels. Each pixel has a separate pair of opposing pixel electrodes, with light influencing material between them. Voltages are selectively applied to the electrode pairs, causing the light influencing material between the electrode to emit light or to change optical density. These opposing pixel electrodes may be located on opposing substrates, such as opposing glass plates, with the light influencing material, such as liquid crystal material, located between the substrates. Alternatively, the electrodes may be on the same plate, with the liquid crystal material disposed therebetween.

In displays with many pixels it is necessary to use x-y matrix addressing. In x-y matrix addressing all of the "first" pixel electrodes of a given row are connected to an address line associated with that row and all the "second" pixel electrodes of a given column are connected to an address line associated with that column. This enables each pixel to be address by selecting its associated x and y address lines.

In a preferred embodiment of the instant telecommunications system, the display is an active matrix liquid crystal display, wherein each of the pixels has associated with it a non-linear electronic device which acts as a switch. This switch enables current to flow to or from the pixel during the brief period when the pixel is selected enabling the pixel to rapidly change state from "off" to "on", or vice versa. However, the switch prevents current flow to or from the pixel when the pixel is not selected. In this way the charge placed on the pixel during its brief selection period is substantially maintained during the rest of the scanning cycle. As a result, the pixel tends to maintain its "on" or its "off" state during the entire scanning cycle, greatly increasing the contrast and readability of the display.

The non-linear device that is the switch, may be a two-terminal device, as a diode, or a three-terminal device, as a transistor.

## ii. Pixel With Two Terminal Control Devices

A two-terminal control device is one that has two current path electrodes and a junction therebetween. The junction has a barrier height which allows current flow in one direction but blocks current flow in an opposite direction.

FIGS. 5 and 6 illustrate a display pixel 510. Although just one display pixel 510 is illustrated, it can be appreciated that many such pixels arrayed in row and column arrangement are necessary to provide a complete liquid crystal display.

The display pixel 510 includes an insulative substrate 512 which can be formed from glass, for example. Formed on the substrate 512 is an interconnect bus or lead 514 and a first address lead 516. The interconnect lead 514 and first address lead 516 can be formed from a conductive material such as a metal, for example, aluminum, molybdenum, or a molybdenum tantalum alloy, chromium, tantalum tungsten, palladium or platinum.

The display pixel 510 further includes at least a pair of diodes 518 and 520 formed on the interconnect leads 514 and first address lead 516 respectively. The diodes 518 and 520 are preferably formed from a deposited semiconductor material. The deposited semiconductor material is preferably an amorphous semiconductor alloy including silicon. The amorphous silicon alloy can also include hydrogen and/or fluorine and can be deposited by plasma assisted chemical vapor deposition, i.e. glow discharge. The diodes 518 and 520 preferably have a p-i-n configuration formed by a first doped region 518a 520a, which can be p-type, an intrinsic region 518b and 520b overlying the first doped regions 518a and 520a respectively, and a second doped region 518c and 520c, which be n-type, overlying the intrinsic regions 518b and 520b respectively.

The display pixel 510 further includes a second address lead 526 in electrical contact with the n-type region 518c of diode 518 and a first electrode 528 which is in electrical connection with the interconnect lead 514 through the opening 524 and the n-type region 520c of diode 520.

The address leads 516, 526 are formed of deposited metal essentially parallel to one another, as can be seen from FIG. 6, and both are coupled to the first electrodes 528. The diodes 518,520 form an isolator coupled to the first electrode 526. The isolator formed of the diodes 518, 520 has first and second inputs to which the address line 526, 516 respectively are coupled.

The first electrode 528 can be configured in a square configuration as illustrated in FIG. 6 and can be, for example, 300 microns to 2,000 microns on a side depending on the overall size of the finished display matrix and the desired aspect ratio.

With the first electrode 528 contacting the interconnect lead 514 through the opening 524, the diodes 518 and 520 are connected together in series relations. The address lead 516 and 526 are only in electrical connection with the first electrode 528 through the diodes 518 and 520.

Overlying the resulting structure described above, is a layer of light influencing material 530.

The display pixel 510 further includes a top transparent insulative plate 532 formed from, for example, glass. On the inner surface 534 of the insulative plate 532 is a layer of transparent conductive material 536 which can be, for example, indium tin oxide. The indium tin oxide layer 536 forms a second electrode of the display pixel 510. This electrode 536 is in contact with the liquid crystal material 530. The second electrode 536 is configured to have the same dimension as the first electrode 526 and is aligned therewith. The top insulative plate 532 is polarized in a manner well known in the art consistent with the type of liquid crystal display material (light influence material 530) utilized in the display pixel 510. An alignment coating of a conventional type can be applied over the first electrode 526 for the purpose of aligning molecules in the liquid crystal display material 530.

FIG. 7 illustrates the equivalent circuit diagram of the pixel 510 of FIG. 10. The pixel 510 includes the address leads 516 and 526, a pair of series connected diodes 518 and 520 coupled between the address leads 516 and 526, and the first conductive electrode 526 coupled between the diodes. The pixel 510 further includes the second electrode 536 spaced from the first electrode 526 . In between the electrodes 526 and 536 is the liquid display material 530.

The useful life of a liquid crystal display can be extended if the polarity of the applied voltage potential is reversed during alternate frames or scans. this can be accomplished with the pixel 510 of FIG. 10 by impressing a positive potential onto first address leads 516 and a negative potential onto the second electrode 536 during one frame to forward bias diode 520 and by impressing a negative potential onto the second address lead 526 and a positive potential on the second electrode 536 during the next frame. Repeating this sequence causes the potential applied to the liquid crystal display material to be reversed during alternate frames.

## ii. Pixel With Three-Terminal Control Devices

Alternatively, the active matrix may have three-terminal non-linear control devices. A three-terminal control device is one that has two current path electrodes and a control electrode, with the effective resistance between the two current path electrodes being controlled as a function of a signal supplied to the control electrode. For example, in the thin film field effect transistors often used in active matrix displays, the voltage applied to the gate electrode controls the amount of current which flows between the source and drain electrode of the transistor.

Pixel electrodes of one polarity, the associated X and Y address lines, and the associated three-terminal devices are deposited on one substrate of the display. Each of the three-terminal devices has one of its current path electrodes connected to pixel electrode of the associated pixel. The X and Y lines are on the substrate to enable each three-terminal device and its associated pixel to be individually addressed. One of the sets of the address lines, for example, the X address lines, are connected to the control electrodes of the three terminal devices, with an X address line being connected to all of the control electrodes (gate) in one row of pixels. Correspondingly, the other set of address lines, for example, the y address lines, are connected to one of the current path electrodes (source or drain) of the control devices, with a Y address line being connected to a current path electrode (source or drain) of each pixel in one column of pixels. The pixel electrodes on the opposite substrate are usually connected to a common voltage, such as ground.

An individual pixel is switched by applying a voltage above a threshold voltage across the liquid crystal material of the pixel. This is accomplished by applying a potential i.e., a gate voltage, to the X address line connected to the control electrode of a three-terminal device and simultaneously applying a potential, i.e., a drain potential, across the Y address line connected to the current path electrode of the three-terminal device. For example, when the three terminal devices are thin film field effect transistors, the gate of each transistor is connected to an X address line and the source of each transistor is connected to a Y address line. In a field effect transistor, the pixel is switched, i.e., is selected or is turned on or off by applying the appropriate voltages between to the X address line connected to its gate and the Y address line connected to its source.

A typical light influencing display, useful in providing the display of the integral, modular, input and display and the mode of operation of the display are shown in FIGS. 8.

FIG. 8 shows a schematic diagram of a 3 X 3 pixel array. The circuit elements formed on the bottom substrate are shown by solid lines and the circuit elements formed by the strip conductors 844 on the upper substrate 842 are shown by dotted lines. The gates 824 of the transistors are connected to the x address lines 830 while the drains 826 are connected to the y address lines 844 through the pixel electrodes 820 and pixel 851. The sources 828 of all of the transistors 822 are connected to ground through the second conductive leads 832.

In operation, each of the transistors 822 in a given row 814, 815, or 816 is turned on when its respective X address line 830 is supplied with a positive "on" gate voltage, which for the TFTs of the illustrated embodiment is approximately 10 volts. Once the transistors 822 of a given row are turned on, the conductivity between the sources 828 and drains 826 of that row is greatly increased, effectively connecting the bottom pixel electrodes 820 of that row to ground. When a given row is selected in such a manner, a plurality of selected data voltages are applied in parallel to the second pixel electrodes of the row by means of the data leads, or Y lines 844. This causes each of the pixels 851 in the selected row to be charged to a voltage equal to the difference between the data voltage on its associated Y line and the ground voltage on its source line 832.

As stated above with respect to two terminal devices, it is important to periodically reverse the polarity of the voltages applied across the individual pixels. For this reason the voltage driving scheme used to power a typical display is divided into alternating positive and negative modes.

3. The Integrated Display and Touch Sensor

The touch sensitive position sensor described hereinabove and the display means also described hereinabove, may either be discrete individual elements which are subsequently collated or stacked as is illustrated in Figure 8a. Alternatively, the touch sensitive position sensor may be a coating or layer disposed upon the display means as is shown in Figure 8b.

C. THE MEMORY DEVICE

The next major component of the instant telecommunications system is a memory device adapted to store information which is either: 1)incoming information received from facsimile machine; 2)voice information such as a message left by a caller; 3)information stored in memory after having been scanned in by the thin film scanning device; or 4)information preprogrammed in to allow for interactive menu driven function of the telecommunications system.

The telecommunications system of the instant invention is adapted to use one or more memory devices as required for the type and amount of information desired to be stored. In a preferred embodiment, the memory device is a random access memory, such as a flash RAM card memory. In a further preferred embodiment, the flash RAM memory is removable from the telecommunications device so that information stored thereon can be use as input file to, for example, word processing programs used in conjunction with a personal computer. Similarly, a personal computer could then be used to store information of the flash RAM memory, which could then be used as an input file for the telecommunications system to be sent via facsimile at some later date, or as a memo to the system user. Alternatively, the memory device may be some other type of memory chip of the kind well known in the art, such as a miniature floppy diskette or an optical memory.

Of course the instant telecommunications system also includes standard read only memory elements of the type well know in the art so that operational and control functions of the telecommunications system are always present "on-board" the system, without regard to the presence of the flash Ram memory card.

## D. COMMUNICATIONS ELEMENTS

In addition to the foregoing elements, the telecommunications system requires certain components which allow it to communicate with telephones, (both standard and cellular) and with facsimile equipment. The first such component is a fax modem integrated circuit, which includes interfaces to the public telephone lines either through a direct access arrangement or through the mobile cellular network. In a preferred embodiment, this fax modem integrated circuit performs the protocol conversions which are required for the telecommunications system to communicate with standard facsimile machine. A typical such fax modem integrated circuit is a Yamaha model YM7109 fax modem integrated circuit.

A related component necessary for the telecommunication system to effect facsimile communication is a compression/expansion engine integrated circuit. This component is required to perform the algorithms required to transmit and receive compressed information in communication with a facsimile machine. A compression/expansion engine of this type is exemplified by NEC model No. UPD72185.

A third component essential for communication is a standard telephone/speakerphone circuit of the type well known in the art. This element is of course necessary in order to effect voice communication between the telecommunications system and the standard telephone systems.

## E. THE CONTROL ELEMENT

As with all complex electronic devices, it is necessary to provide a control element or elements to oversee the functions and operations of the device. The telecommunications system of the instant invention is no exception in this regard. A microprocessor is provided so as to over see all of the operations and functions of the various components of the telecommunications system. The microprocessor used in the regard is a standard 80186 microprocessor of the type well known in the art.

As noted hereinabove, the telecommunications system places a premium on light weight and portability, thus, it is necessary to reduce the power requirements and thus avoid the need for a large battery. The battery power source provided can be made appropriate for the power requirements of each of the components by an efficient, integrated switching circuit or power convertor. Power is supplied to each of these components for the absolute minimum time required for that component to accomplish its function. In this regard, the microprocessor includes a reduced function mode to conserve power and the flash card memory does not require a battery to preserve information stored thereon. A small long-life battery can be provided to power the real-time clock and the memory of the microprocessor. Otherwise, the telecommunications system is powered by a rechargeable battery pack, or one or more non-rechargeable batteries. Of course, the system is also adapted to run off of standard household currents.

## F. RELATIONSHIP BETWEEN THE ELEMENTS

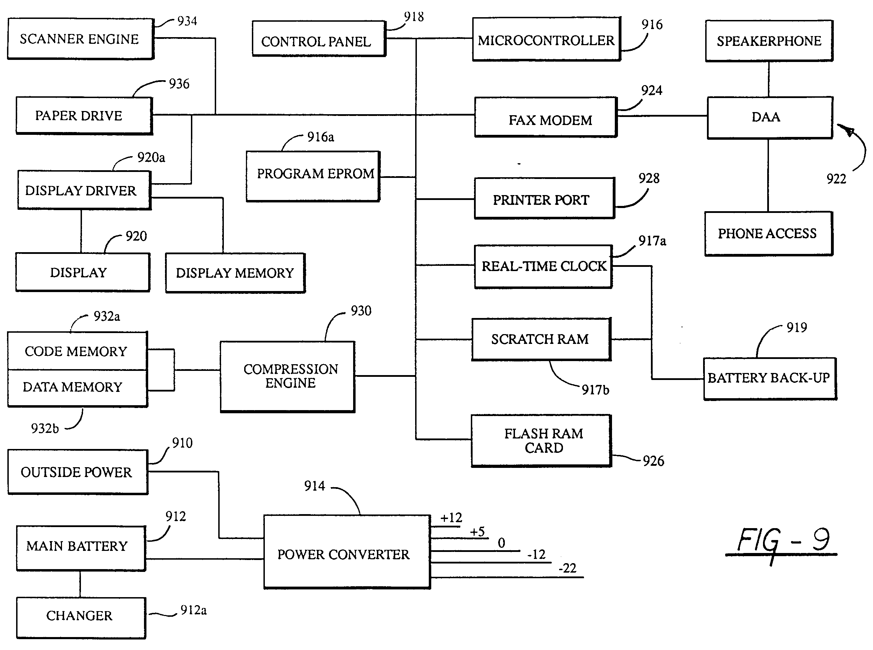

While each of the elements of the telecommunications system have been set forth hereinabove, it is useful to peruse Figure 9 so as to gain an appreciation for the relationship of each component to the others.

Turning therefore to Figure 9, the telecommunications system relies upon a source of power to operate each element. This power source can be either standard household or automotive power sources as is illustrated in block 910, or can be provided by a rechargeable battery as is illustrated in blocks 912 and 912a. As each of the component elements of the telecommunications system has differing power requirements, the power provided can be made appropriate for the power requirements of each of the components by an efficient, integrated switching circuit or power converter 914. Power is supplied to each of these components through this convertor 914 for the absolute minimum time required for that component to accomplish its function.

Given a source of power, the telecommunications system next relies upon the microprocessor or microcontroller 916, which together with the program EPROM 916a govern each of the functions and operations of the telecommunications system. The microprocessor typically includes a real time clock 917a and a scratch RAM 917b to perform it operation. These devices 917a and 917b further include a small, long life battery backup 919 so that the telecommunications system can continue to function without regard to the presence of the flash memory device. The operator of the telecommunications system can direct the operation thereof by using the control panel 918 in conjunction with the dynamically varying information screens provided by the display 920. As noted hereinabove, the control panel 918 is a touch sensitive position sensor integrally formed with the display 920.

In operation, the telecommunications system is adapted to receive information via the standard telephone/speakerphone circuit 922 generally. Voice information is readily received and transmitted by the speakerphone circuit, while facsimile information is directed through a fax modem integrated circuit 924, which performs the protocol conversions which are required for the telecommunications system to communicate with standard facsimile machine.

The facsimile information the is directed to two separate locations: 1) the flash RAM memory device 926 and 2) the display 920 (via the display driver and memory 920a) were it is displayed in human readable form. As has been noted hereinabove, the displayed information may then be saved in the flash RAM memory or deleted therefrom. If the operator desires to make a hard copy of the stored information, two alternatives exist. First, the flash RAM memory card 926 may be removed and inserted into, for example, a personal computer, wherein information stored therein can be used as an input file for a word processing package and printed therefrom. Similarly, information can be stored on the flash RAM memory card and subsequently sent by facsimile from the telecommunications system. Alternatively, the information stored on the memory card may be downloaded therefrom to a standard printer (having the appropriate software) via a printer port 928.

As noted hereinabove, a related component necessary for the telecommunication system to effect facsimile communication is a compression/expansion engine integrated circuit 930. This component is required to perform the algorithms required to transmit and receive compressed information in communication with a facsimile machine. A compression/expansion engine of this type further requires an amount of associated memory 932a and 932b.

Information to be transmitted in facsimile form is scanned into the system through the scanner device or scanner engine 934 which digitizes the pattern of information of the document or image-bearing member. As noted above, the scanning device includes a paper drive 936 to correctly feed the image-bearing member past the scanning device 934. Information so scanned is subjected to the regimen of the compression/expansion engine 930 and the fax modem 924 prior to final transmission via the standard telephone network. Of course, the scanned information may be first stored in the flash memory 926, (or may have been placed in the memory by, for example a personal computer) prior to its transmission.

While the invention has been described with respect to certain preferred embodiments and exemplifications, those embodiments and exemplifications are not intended to define or otherwise limit the scope of the instant invention; rather the instant invention is to be define solely by the claims appended hereto.

**Claims**

1. A portable, compact, voice and facsimile information telecommunications system (1), said system comprising;

   a voice/facsimile data signal receiving/transmitting means (922) (924) adapted to transmit and receive both voice and facsimile information;

   processing means connected to said voice/facsimile information signal receiving/transmitting means, said processing means adapted to demodulate incoming voice and facsimile information and modulate outgoing voice and facsimile information;

   memory means connected to said processing means for storing information (926);

   display means (920) for displaying received information;

   an thin film image scanning device (934) for digitizing information on an image bearing member;

   information compression means (930) adapted to perform algorithmic operations associated with facsimile information transmission and receipt; and

   electronic control means (916) for coordinating operation of said processing means, memory means, display means, information signal receiving/transmitting means, information compression means and scanning device.

2. The telecommunications system of Claim 1, further including an information outlet means operatively associated with said electronic control means and said memory means, adapted to download information stored in said memory means for recording, in human readable form, said stored information.

3. The telecommunications system of Claim 2, wherein the information outlet means is a standard printer connection.

4. The telecommunication system of Claim 1, wherein said voice/facsimile information signal receiving/transmitting means is selected from the group consisting of a standard telephone, a cellular telephone, a radio, a wireless communication terminal and combinations thereof.

5. The telecommunications system of Claim 1, wherein said processing means is a modem integrated circuit.

6. The telecommunications system of Claim 5, wherein said modem integrated circuit further includes interface means for communication with standard telephone service through either direct access or the mobile cellular network.

7. The telecommunications system of Claim 5, wherein said modem integrated circuit is further adapted to perform protocol conversion for communication with standard facsimile equipment.

8. The telecommunications system of Claim 1, wherein said memory means comprises a plurality of memory means.

9. The telecommunications system of Claim 1, wherein said memory means is a long term memory means.

10. The telecommunications system of Claim 9, where said memory means is erasable and programmable.

11. The telecommunications system of Claim 9, wherein said memory means is a serial access random access memory.

12. The telecommunications system of Claim 9, where said memory means is erasable, programmable and removable.

13. The telecommunications system of Claim 12, wherein the memory means is flash memory card.

14. The telecommunications system of Claim 1, wherein said memory means is further adapted to store voice data.

15. The telecommunications system of Claim 1, wherein said memory means is adapted to store received facsimile information.

16. The telecommunication system of Claim 1, wherein said memory means is adapted to store information digitized by said image scanning device.

17. The telecommunications system of Claim 1, wherein said display means is selected from the group consisting of an active matrix liquid crystal display, a passive liquid crystal display, an electroluminesent display, a gas plasma display and combinations thereof.

18. The telecommunications system of Claim 17, wherein said display means is an active matrix liquid crystal display including a plurality of discrete picture elements arranged in an N by M matrix of rows and columns.

19. The telecommunications system of Claim 18, wherein each liquid crystal picture element comprises a pair of electrodes having liquid crystal material disposed therebetween and at least one threshold device connected at one of the terminals thereof to one of said electrodes.

20. The telecommunications system of Claim 19, wherein a pair of threshold devices are provided, said threshold devices electrically coupled together at a common node in non-opposing series relationship.

21. The telecommunications device of Claim 20, wherein said threshold devices are fabricated from deposited layers of semiconductor material.

22. The telecommunications system of Claim 19, wherein said at least one threshold device comprises a transistor formed from deposited layers of semiconductor material.

23. The telecommunications system of Claim 20, wherein the threshold devices comprise diodes formed from deposited layers of semiconductor material.

24. The telecommunications system of Claim 21, wherein the semiconductor material is an amorphous semiconductor material.

**25.** The telecommunications system of Claim 24, wherein the amorphous semiconductor material is selected from the group consisting essentially of amorphous silicon, amorphous silicon alloys, amorphous germanium, amorphous germanium alloys and combinations thereof.

**26.** The telecommunications system of Claim 1, wherein said display means further includes an integrally formed touch position sensor input means.

**27.** The telecommunications system of Claim 26, wherein said display and integrally formed touch position sensor input means are adapted to function as a dynamically varying control panel.

**28.** The telecommunications system of Claim 27, wherein said integral touch position sensor input means is a thin film membrane switch panel.

**29.** The telecommunications system of Claim 27, wherein said integral touch position sensor input means is a solid state touch sensor panel.

**30.** The telecommunications system of Claim 1, further including sound sensing/recognition means connected to said switching means, said sound sensing/recognition means adapted to provide voice actuated operation of said telecommunications system.

**31.** The telecommunications system of Claim 1, wherein said thin film image scanning device comprises an array including at least one column of light sensitive elements operatively disposed upon a substrate, so as to be adjacent to and cover at least a portion of at least one dimension of an image bearing member, so as to provide electrical signals representative of said member.

**32.** The telecommunications system of Claim 31, wherein said light sensitive elements comprise photovoltaic cells.

**33.** The telecommunications system of Claim 31, wherein said light sensitive elements comprise photoresistors.

**34.** The telecommunications system of Claim 31, wherein said light sensitive elements are formed from deposited semiconductor material.

**35.** The telecommunications system of Claim 31, wherein said deposited semiconductor material is an amorphous semiconductor alloy.

**36.** The telecommunications system of Claim 31, further including a light source arranged for projecting light onto said image bearing member, on the side thereof immediately adjacent said array of light sensitive elements.

**37.** The telecommunications system of Claim 31, wherein said light sensitive elements are adapted to provide electrical signals representative of different colors carried by said image bearing member.

**38.** The telecommunications system of Claim 1, wherein said electronic control means is a microprocessor circuit.

**39.** The telecommunications system of Claim 38, wherein the microprocessor circuit includes a real time clock and associated memory.

**40.** The telecommunications system of Claim 1, further including a compact ergonomically designed housing.

**41.** The telecommunications system of Claim 40, wherein said housing has a via formed therein adapted to allow said thin film contact image scanning device to operate as a hand held scanner.

**42.** The telecommunications system of Claim 1, further including a power source.

**43.** The telecommunications system of Claim 42, wherein the power source is a portable power source.

**44.** The telecommunications system of Claim 43, wherein said portable power source is a rechargeable battery pack.

FIG - 1

FIG - 2

FIG - 3

_FIG - 5_

_FIG - 6_

_FIG - 4_

418a  418b  418c  418d  418e  418f  418g

422a
422b
422c
414b
422d
422e
422f
410
422g

414a
410
402
404
412b
412a

420a
420b
420c
420d
420e
420f
420g

416a  416b  416c  416d  416e  416f  416g

_FIG - 7_

520  518
516
528
530  536  526
510

_FIG - 8A_

_FIG - 8B_

FIG - 9